# DEMANDE DE BREVET EUROPEEN

(11) **EP 2 742 990 A1**
(43) Date de publication de la demande: **18.06.2014**
(21) Numéro de dépôt: 13176625.5
(22) Date de dépôt: 16.07.2013
(51) Int. Cl.: B01D 53/86

(54) **Installation et procédé de traitement de gaz avec régénération et recyclage de gaz issu de la régénération.**

(30) Priorité: 18.07.2012 FR 1256927
(71) Demandeur: Vinci Environnement, 92500 Rueil Malmaison (FR)
(72) Inventeur: Vizier, Nicolas, 74700 Sallanches (FR); Thibaut, Romain, 78360 Montesson (FR)
(74) Mandataire: Novagraaf Technologies

(57) **Abrégé**

L'invention concerne une installation de traitement comprenant :
- un circuit (3a) de traitement de gaz comportant un réacteur (1) de dénoxification de gaz qui :
* présente une entrée (7) communiquant avec un conduit d'alimentation en gaz à dénoxifier et une sortie (11) communiquant avec un conduit d'évacuation de gaz dénoxifié,
* et contient un catalyseur (5a,5b,5c,5d) à dénoxifier ,

- un circuit (3b) de régénération du catalyseur, ce circuit présentant une entrée (17) de gaz dans le réacteur communiquant en amont avec un conduit (19) d'alimentation en gaz adapté à régénérer le catalyseur et une première sortie (21) communiquant avec un conduit (23) d'évacuation de gaz issu de la régénération, le conduit (19) d'alimentation en gaz de régénération communiquant avec une sortie de gaz de moyens (29) de chauffage de gaz dont une entrée communique avec le conduit d'alimentation en gaz à dénoxifier,

Un conduit (55) permet de recycler du gaz issu de la régénération, en étant connecté, en amont (55a), au conduit (23,39) d'évacuation de gaz issu de la régénération et, en aval (55b), entre les moyens (29) de chauffage des gaz et ladite entrée (17) de gaz de régénération dans le réacteur.

## Description

L'invention concerne une installation et un procédé de traitement de gaz.

Il s'agit de dénoxifier du gaz dans un réacteur catalytique et de régénérer périodiquement le catalyseur de façon performante en perturbant peu le rythme de la dénoxification.

A priori, le réacteur catalytique sera de type low dust (à poussières réduites).

On entend par dénoxification d'un gaz la réduction par voie catalytique des oxydes d'azotes contenus dans ledit gaz. Les oxydes d'azotes, désignés de façon générale par la formule NOx, comprennent notamment les composés suivants: NO, N02, N20.

Les procédés de dénoxification s'appliquent notamment aux gaz issus de l'incinération des ordures ménagères, et permettent de diminuer la teneur en oxydes d'azote des gaz finalement rejetés à l'atmosphère, de sorte que cette teneur soit inférieure au seuil réglementaire imposé.

Dans les procédés connus, les gaz à traiter sont introduits en entrée d'un réacteur catalytique, en phase de fonctionnement, transitent par un catalyseur approprié afin de subir la dénoxification souhaitée, avant d'être rejetés à l'atmosphère.

Généralement le procédé de dénoxification par voie catalytique est une étape supplémentaire dans le traitement des gaz. La dénoxification est réalisée après l'étape de dépoussiérage et de déchloration/désulfuration.

Au contact des gaz contenant les oxydes d'azote, le catalyseur se charge progressivement en différents sels issus des réactions de combinaison entre NH₃ et HCl/SO₂ résiduels, et perd de ce fait une partie de son activité. Il est donc nécessaire de régénérer périodiquement le catalyseur, afin qu'il retrouve ses performances, et que, en sortie, les teneurs en NOx restent inférieures au seuil réglementaire.

Ainsi, en phase de régénération, les procédés connus prévoient de faire traverser le catalyseur par un gaz chauffé à une température suffisamment importante pour provoquer la sublimation des sels et leur évacuation sous forme gazeuse (NH3, SO2, HCI).

Toutefois, dans les réalisations connues, les gaz issus de la régénération sont évacués de la même façon que les gaz traités, voire simultanément dans un même conduit lorsque le réacteur est pourvu de plusieurs modules dont certains sont en phase de fonctionnement tandis que les autres sont en phase de régénération. Or, les gaz issus de la régénération contiennent sous forme de gaz les polluants issus des sels ôtés du catalyseur. Ainsi, les teneurs maximales réglementaires en polluants des gaz rejetés à l'atmosphère ne sont plus respectées (HCI, SO2, NH3).

Dans une évolution des réalisations connues, FR-A-2880287 propose une installation de traitement de gaz, comprenant :
- un circuit de traitement de gaz à dénoxifier où est disposé un réacteur catalytique de dénoxification de gaz qui :
   * présente une première entrée de gaz communiquant avec un conduit d'alimentation en gaz à dénoxifier et une première sortie de gaz communiquant avec un conduit d'évacuation de gaz au moins en partie dénoxifié,
   * et contient un catalyseur apte à dénoxifier une partie au moins du gaz entré dans le réacteur catalytique et au contact duquel passe une partie au moins dudit gaz entré,
- un circuit de régénération d'une partie au moins du catalyseur du réacteur catalytique, ce circuit présentant une première entrée de gaz dans le réacteur catalytique communiquant en amont avec un conduit d'alimentation en gaz de régénération adapté à régénérer le catalyseur et une première sortie de gaz communiquant avec un conduit d'évacuation de gaz issu de la régénération, le conduit d'alimentation en gaz de régénération communiquant avec une sortie de gaz de moyens de chauffage de gaz dont une entrée de gaz communique avec le conduit d'alimentation en gaz à dénoxifier.

Un problème encore à traiter concerne l'optimisation énergétique de la dénoxification et de la régénération périodique du catalyseur.

A cette fin, il est proposé que l'installation comprenne un conduit de recyclage pour recycler une partie du gaz issu de la régénération, le conduit de recyclage étant connecté, à une extrémité amont, au conduit d'évacuation de gaz issu de la régénération et, à une extrémité aval, entre les moyens de chauffage des gaz et ladite première entrée de gaz de régénération dans le réacteur catalytique, pour assurer ainsi un mélange de gaz.

Pour favoriser encore davantage cette performance, on recommande que le conduit d'évacuation de gaz issu de la régénération communique avec le conduit d'alimentation en gaz à dénoxifier, en amont des moyens de chauffage des gaz, pour mélanger ces gaz.

Et subsidiairement, dans ce cas, on conseille encore que la communication entre le conduit d'évacuation de gaz issu de la régénération et celui d'alimentation en gaz à dénoxifier, en amont desdits moyens de chauffage des gaz, soit située en amont d'au moins un appareil de traitement apte à diminuer la teneur des gaz à traiter en au moins l'un des composés suivants: S02, HCl.

Pour favoriser la performance des moyens précités de chauffage et faciliter leur utilisation, on conseille que ces moyens de chauffage des gaz comprennent au moins, sur le chemin du gaz issu du conduit d'alimentation en gaz à dénoxifier :
- un brûleur à gaz combustible,
- ou un échangeur de chaleur où circuleront, sans se mélanger :
   * le gaz déjà chauffé dans le récupérateur et issu du conduit d'alimentation en gaz à dénoxifier, et,
   * des produits (externes) qui arriveront plus chauds dans l'échangeur de chaleur, de préférence à environ 20°C au-dessus de la température de sortie du gaz issu du conduit d'alimentation en gaz à dénoxifier et ainsi réchauffé, soit a priori à plus de 350°C et avantageusement plus de 380°C.

Pour valoriser un cycle thermique, on conseille en outre que les produits qui arriveront dans le premier échangeur de chaleur cité soient des fumées recyclées issues d'une chaudière ou de la vapeur d'un cycle de valorisation énergétique.

Afin d'optimiser encore la performance thermique, on recommande qu'une vanne de répartition soit disposée pour répartir les gaz issus de la régénération entre ceux entrant dans le conduit de recyclage et ceux dirigés vers le conduit d'alimentation en gaz à dénoxifier, dans un rapport supérieur à 2/1, et de préférence supérieur à 3/1.

Dans le même but, on conseille que la connexion de l'extrémité aval du conduit de recyclage entre les moyens de chauffage des gaz et ladite première entrée de gaz de régénération dans le réacteur catalytique apporte, dans le conduit d'alimentation en gaz de régénération du réacteur catalytique, un débit volumique de gaz issus de la régénération supérieur à au moins deux fois, et de préférence à au moins trois fois, celui issu des moyens de chauffage des gaz.

Pour tirer parti de l'optimisation énergétique de la dénoxification compartimentée, avec régénération périodique partielle du catalyseur, comme dans FR-A-2880287 ou FR-A-2855767, on recommande que le réacteur catalytique de l'installation comprenne :
- plusieurs modules séparés les uns des autres qui, chacun:
   * contiennent du catalyseur de dénoxification,
   * pour un fonctionnement du module dans une phase de dénoxification des gaz, présentent une dite première entrée de gaz s'ouvrant alors sur le conduit d'alimentation en gaz à dénoxifier et une dite première sortie de gaz s'ouvrant alors sur le conduit d'évacuation de gaz au moins en partie dénoxifiés, et,
   * pour un fonctionnement du module dans une phase de régénération du catalyseur de dénoxification, présentent une dite première entrée de gaz s'ouvrant alors sur le conduit d'alimentation en gaz de régénération et une dite première sortie de gaz s'ouvrant alors sur le conduit d'évacuation de gaz issus de la régénération, et
- des moyens de réglage pour faire fonctionner chaque module soit dans la phase de régénération du catalyseur de dénoxification, soit dans la phase de dénoxification de gaz.

Pour renforcer l'avantage de l'installation proposée dans FR-A-2880287, on recommande même que le réacteur catalytique comprenne :
- un premier compartiment d'entrée dans lequel du gaz à dénoxifier est à introduire par ladite première entrée de gaz communiquant avec le conduit d'alimentation en gaz à dénoxifier;
- un premier compartiment de sortie duquel du gaz au moins en partie dénoxifié est à évacuer par ladite première sortie de gaz communiquant avec le conduit d'évacuation de gaz;
- au moins deux modules séparés, chacun contenant du catalyseur de dénoxification et présentant un premier orifice d'entrée communiquant avec le premier compartiment d'entrée et un premier orifice de sortie communiquant avec le premier compartiment de sortie ;
- un deuxième compartiment d'entrée dans lequel du gaz de régénération est à introduire par ladite première entrée de gaz communiquant avec le conduit d'alimentation en gaz de régénération, chaque module présentant un deuxième orifice d'entrée communiquant avec ledit deuxième compartiment d'entrée du réacteur, et,
- pour chaque module, des moyens d'obturation d'entrée mobiles aptes à obturer sélectivement le premier ou le deuxième orifice d'entrée dudit module.

Pour le traitement en aval du catalyseur, on peut conseiller que le réacteur comprenne en outre:
- un deuxième compartiment de sortie d'où du gaz issu de la régénération du catalyseur est à évacuer, chaque module présentant un deuxième orifice de sortie communiquant avec ledit deuxième compartiment de sortie du réacteur ;
- pour chaque module, des moyens d'obturation de sortie mobiles aptes à obturer sélectivement le premier ou le deuxième orifice de sortie dudit module, lesdits moyens d'obturation d'entrée et de sortie étant agencés pour que chaque module puisse, en fonction des besoins, être traversé soit par les gaz à dénoxifier soit par le gaz de régénération, indépendamment du ou des autres modules.

Concernant l'aspect procédé de traitement de gaz dans ce type d'application, on recommande en premier lieu qu'il comprenne :
- une étape de traitement de gaz à dénoxifier, comprenant :
   * une alimentation en gaz à dénoxifier d'un réacteur catalytique (9) de dénoxification de gaz, par au moins un conduit d'alimentation en gaz à dénoxifier,
   * un traitement du gaz d'alimentation par contact avec un catalyseur apte à dénoxifier une partie au moins dudit gaz,
- une étape de régénération d'une partie au moins du catalyseur, comprenant :
   * une alimentation d'une partie au moins du catalyseur en gaz de régénération,
   * un contact entre ledit catalyseur et le gaz de régénération,
   * une récupération de gaz issu de la régénération,
   * une circulation, vers le conduit d'alimentation en gaz à dénoxifier, d'une partie au moins du gaz issu de la régénération et récupéré,
   * un piquage ultérieur de gaz, sur ledit conduit d'alimentation, dans un conduit de piquage,
   * un chauffage du gaz circulant dans le conduit de piquage jusqu'à une température adaptée à la régénération du catalyseur,
   * et une circulation du gaz chauffé vers ladite alimentation en gaz de régénération, avec comme particularité additionnelle que l'étape de chauffage du gaz circulant dans le conduit de piquage comprenne un recyclage, vers le réacteur catalytique, d'une partie au moins du gaz issu de la régénération et son mélange avec du gaz issu du piquage.

Pour la performance énergétique, on conseille que ledit mélange intervienne entre ledit gaz issu de la régénération et du gaz circulant en aval d'un (pré-) chauffage du gaz issu du piquage. Ainsi le mélange se fera avec faible perte énergétique.

Pour le même but, il est recommandé que l'étape de chauffage du gaz circulant dans le conduit de piquage pendant l'étape de régénération comprenne, entre ledit piquage et l'alimentation en gaz de régénération d'une partie au moins du catalyseur, un chauffage du gaz circulant dans le conduit de piquage par échange thermique avec une partie au moins du gaz issu de la régénération, dans un échangeur gaz/gaz (appelé récupérateur).

Et favorablement, cet échange thermique dans l'échangeur gaz/gaz se déroulera en amont dudit mélange d'une partie au moins du gaz issu de la régénération et du gaz issu du piquage.

Ainsi, l'échange thermique se déroulera avant ledit chauffage, jusqu'à la température adaptée à la régénération du catalyseur, du gaz circulant dans le conduit de piquage.

Quant à l'avantage des régénération et dénoxification par modules séparés, déjà présentées, on la favorisera si, pendant l'étape de régénération, on fait circuler le gaz de régénération vers ladite partie du catalyseur, dans au moins un premier module du réacteur catalytique parmi plusieurs modules séparés les uns des autres qui chacun contiennent une partie du catalyseur de dénoxification, sans que s'y déroule alors l'étape de traitement de gaz à dénoxifier, laquelle se déroule par contre dans certains au moins des autres modules séparés, par alimentation de ceux-ci en gaz à dénoxifier via le conduit d'alimentation en gaz à dénoxifier.

D'autres objets et avantages de l'invention apparaîtront au cours de la description qui suit, faite en référence aux dessins annexés, dans lesquels :

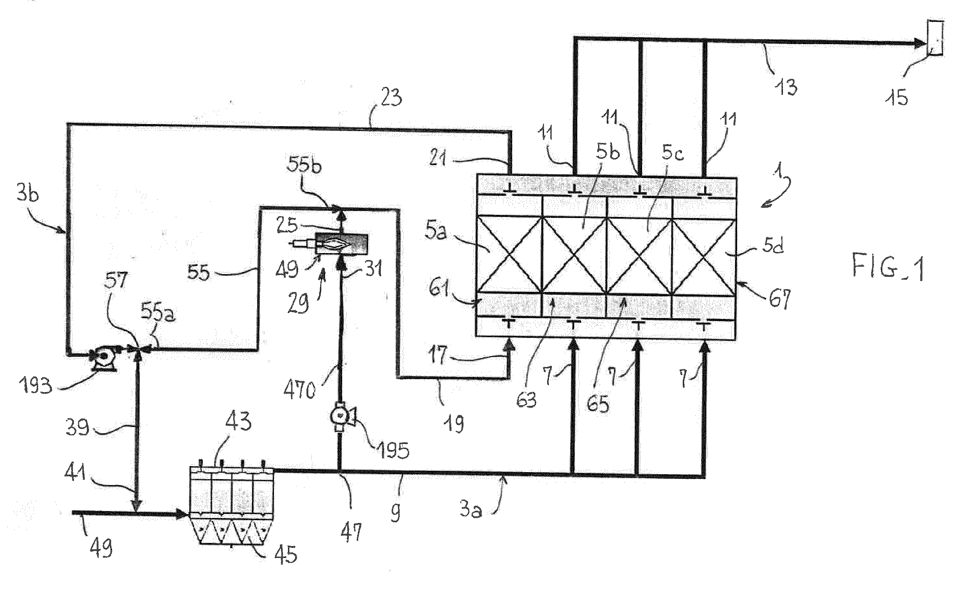

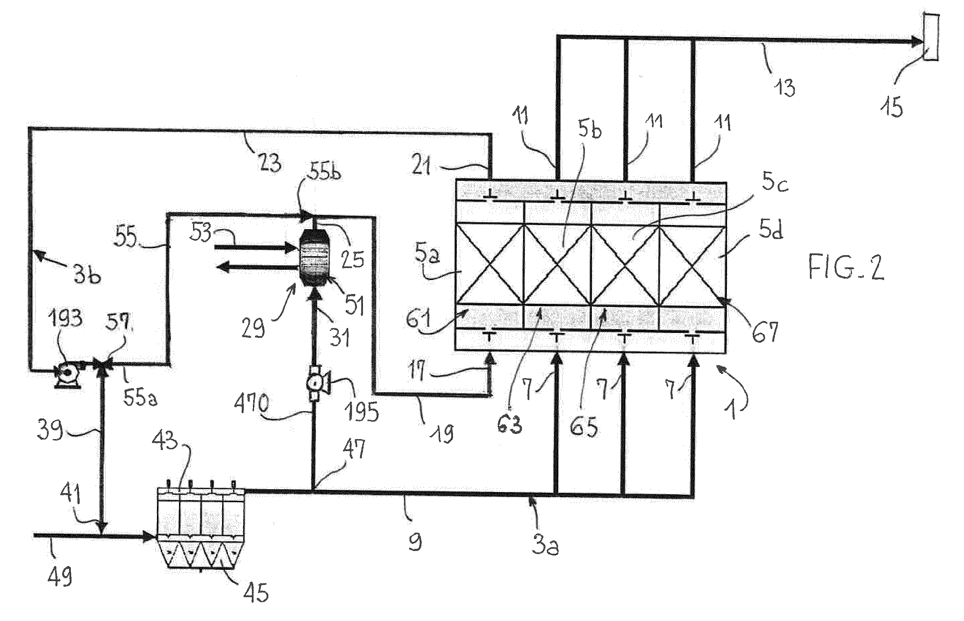

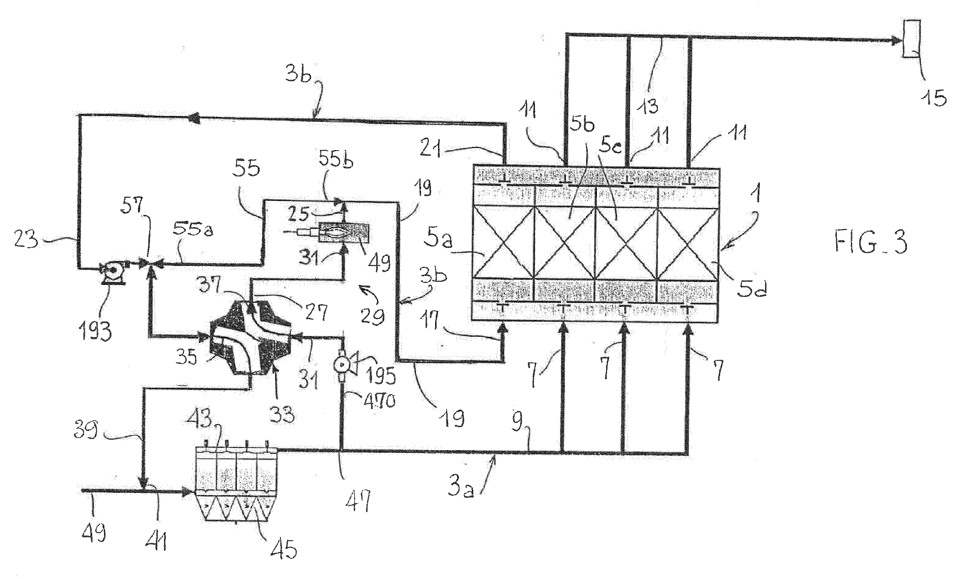

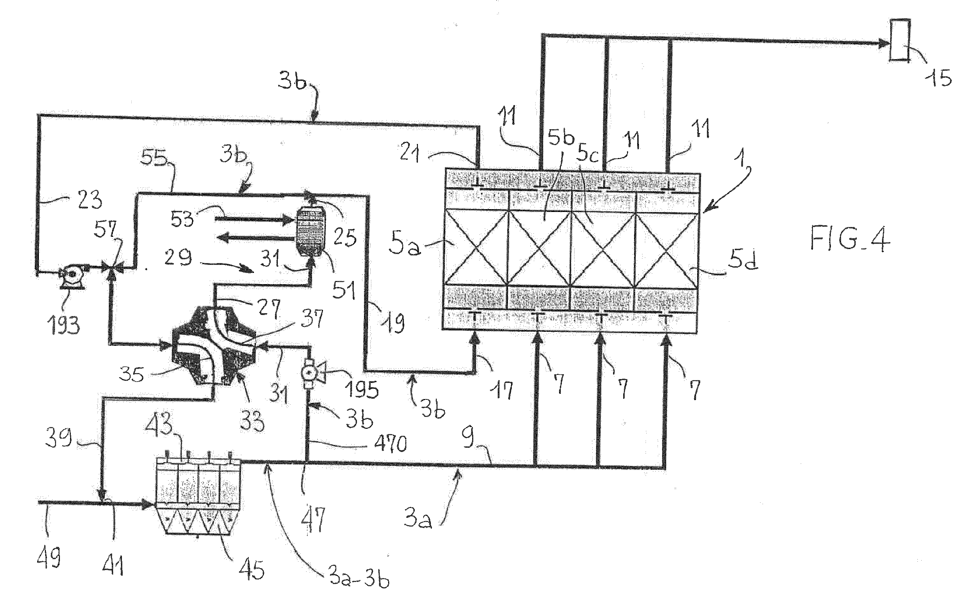

- les figures 1,2,3,4 schématisent une installation de traitement de gaz comprenant un réacteur catalytique de dénoxification de gaz où une régénération du catalyseur est prévue avec recyclage de gaz issu de la régénération et avec (figures 3,4) ou sans (figures 1,2) utilisation d'un récupérateur; et

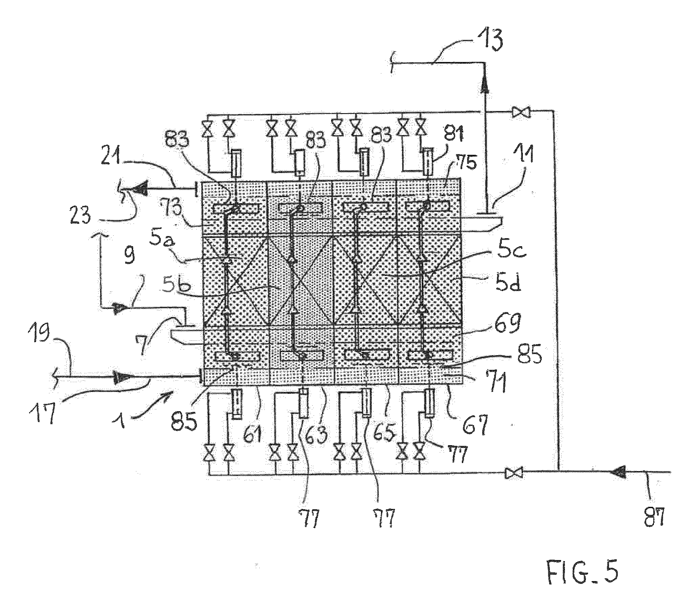

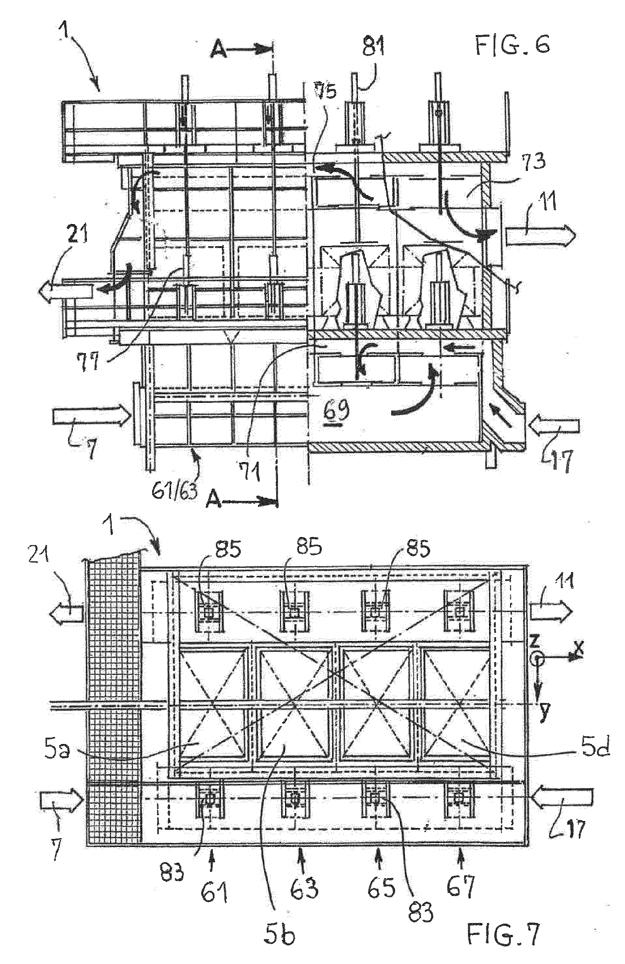

- la figure 5 peut être considérée comme une illustration locale de l'installation de dénoxification de gaz selon l'une des figures 1-4, la figure 6 est une vue en élévation et partiellement en coupe verticale du réacteur catalytique de la figure 5, la figure 7 est une vue de dessus du réacteur catalytique de la figure 6, et les figures 8,9 sont des vues en coupe d'un module du réacteur catalytique, selon la ligne AA de la figure 6, illustrant l'écoulement des gaz, respectivement en mode de traitement et en mode de régénération.

Figures 1 à 4, on voit donc quatre variantes d'une installation de traitement de gaz comprenant un réacteur catalytique 1 de dénoxification de gaz qui peut être à modules ou compartiments individuels 61,63,65,67 permettant de gérer de façon différenciée la régénération d'une partie au moins du catalyseur du réacteur et le traitement, dans le réacteur, du gaz à dénoxifier.

Les figures 5 et 6 montrent une réalisation possible, préférée, d'un tel réacteur si tel est le choix.

Figures 1 à 4, on voit l'installation de traitement de gaz comprend un circuit 3a de traitement de gaz à dénoxifier où est interposé le réacteur catalytique 1 de dénoxification de gaz et un circuit 3b de régénération d'une partie au moins du catalyseur 5a,5b,5c,5d du réacteur catalytique.

Sur le circuit 3a de traitement de gaz à dénoxifier, le réacteur catalytique 1 présente au moins une première entrée 7 de gaz communiquant avec un conduit 9 d'alimentation en gaz à dénoxifier et au moins une première sortie 11 de gaz communiquant avec un conduit 13 d'évacuation de gaz au moins en partie dénoxifié, ici vers une cheminée 15 d'évacuation à l'air libre.

Sur le circuit 3b de régénération de la partie concernée du catalyseur, on trouve une première entrée 17 de gaz dans le réacteur catalytique communiquant en amont avec le conduit 19 d'alimentation en gaz de régénération, lequel est adapté à régénérer le catalyseur. On trouve aussi une première sortie de gaz 21 communiquant en aval avec le conduit 23 d'évacuation de gaz issu de la régénération.

Le conduit 19 d'alimentation en gaz de régénération communique en amont avec une sortie 25 (figures 1,2) et/ou 27 (figures 3,4) de gaz de moyens 29 de chauffage de gaz dont une entrée de gaz 31 communique en amont avec le conduit 9 d'alimentation en gaz à dénoxifier (piquage 47, conduit 470).

De manière classique le réacteur contient un catalyseur, ici réparti en quatre zones 5a,5b,5c,5d. Par contact dans le réacteur avec le gaz admis aux entrées 7, le catalyseur est apte à dénoxifier une partie au moins de ce gaz.

Figures 1 à 4, la configuration de l'installation est telle que, dans le réacteur, la partie du réacteur renfermant le catalyseur, 5a, est sur le circuit 3a et reçoit le gaz de régénération à la première entrée 17, tandis que les parties 5b,5c,5d du réacteur renfermant le reste du catalyseur reçoivent du gaz à dénoxifier, par la première entrée 7. Dans ce cas, et bien qu'elles n'aient pas été représentées, on doit considérer, respectivement :
- que la première entrée 17 de chaque partie 5b,5c,5d est fermée, ce qui ne lui permet alors pas de communiquer directement, à ce moment, en amont du réacteur, avec le conduit 9 d'alimentation en gaz à dénoxifier, et, en aval du réacteur, avec la première sortie 21 de gaz issu de la régénération (puisque la régénération du catalyseur ne s'y opère pas à ce moment),
- tandis que la première entrée 7 de gaz à dénoxifier de la partie 5a est alors fermée, ce qui ne lui permet pas de communiquer à ce moment, en amont du réacteur, avec le conduit 19 d'alimentation en gaz de régénération, et, en aval du réacteur, avec la première sortie 11 d'évacuation de gaz traité, au moins en partie dénoxifié (puisqu'alors, dans cette partie du réacteur, la dénoxification a laissé momentanément la place à la régénération de la partie concernée du catalyseur).

Selon une particularité importante, l'installation comprend en outre un conduit de recyclage 55 pour recycler une partie du gaz issu de la régénération, le conduit de recyclage étant connecté, à une extrémité amont 55a, au conduit 23 d'évacuation (ici de recyclage) de gaz issu de la régénération et, à une extrémité aval 55b, entre les moyens de chauffage 29 des gaz et ladite première entrée 17 de gaz de régénération dans le réacteur catalytique, pour assurer ainsi un mélange de gaz.

Outre du fait du piquage 47, les circuits 3a,3b seront de préférence partiellement communs si, comme préféré et illustré figures 1 à 4, le conduit 39 d'évacuation de gaz issu de la régénération situé, sur le circuit 3b, dans la continuité du conduit 23, en aval du piquage 55a, communique avec le conduit 9 d'alimentation en gaz à dénoxifier, en 41.

De préférence, cette communication 41 sera située en amont d'un appareillage de traitement 43,45 apte à diminuer la teneur de gaz à dénoxifier en aval, dans le conduit 9 (circuit 3a) en au moins l'un des composés suivants: S02, HCI.

Figures 1 à 4, et comme conseillé pour l'efficacité de l'installation dans son ensemble, l'appareillage de traitement 43,45 est situé en amont du piquage 47 de gaz allant vers les moyens 29 de chauffage de gaz (circuit 3b).

Au sein de l'appareillage de traitement, les gaz à traiter, qu'il s'agisse uniquement de gaz à dénoxifier 3 issu de l'admission 49, ou d'un mélange entre lui et le gaz de issu de la régénération provenant du conduit 39, on conseille que le(s) gaz soi(en)t tout d'abord introduit(s) dans un appareil 43 de traitement du HCl, S02 puis passe(nt) dans l'équipement de filtration 45 permettant un dépoussiérage du/des gaz.

Entre les raccordements 47 et 55b, on trouve donc, dans le circuit 3b, les moyens 29 de chauffage de gaz de régénération permettant, avec l'apport calorifique du gaz issu du conduit de recyclage 55, de porter à la température souhaitée le gaz prévu pour la régénération du catalyseur, dans le réacteur 1.

Les moyens 29 de chauffage de gaz comprennent ici au moins l'un parmi un brûleur 49 à gaz combustible (figure 1) et un échangeur de chaleur 51 (figure 2) où circulent, sans se mélanger :
- des produits 53 qui arrivent chauds dans l'échangeur de chaleur, de préférence, de préférence à environ 20-30°C au-dessus de la température de sortie en 25, soit a priori plus de 350°C et avantageusement à plus de 380°C, et,
- du gaz (circuit 3b) qui, à une température inférieure à celle des produits arrivants, est reçu à l'entrée 31 de gaz qui communique avec le conduit 9 d'alimentation en gaz à dénoxifier.

Favorablement, pour une recherche de performance thermique, les produits qui arriveront dans l'échangeur de chaleur 51 seront des fumées recyclées issues d'une chaudière ou de la vapeur d'un cycle de valorisation énergétique.

Avec le brûleur 49 à gaz combustible, on recommande que la sortie 25 du conduit 470 qui le traverse, et où circule donc, sur le circuit 3b, du gaz issu du conduit 9 d'alimentation en gaz à dénoxifier, soit à une température de plus de 350°C (de préférence de l'ordre de 370°C).

Ceci sera de préférence obtenu qu'il y ait ou non présence du récupérateur 33 où, comme prévu figure 3, les gaz peuvent sortir du conduit 37, en direction de l'accès 31, à environ 300-315°C.

Dans les deux cas, on recommande que les gaz dans le conduit 19 soient de la sorte portés à environ 350°C, après mélange, dans le cas de la figure 3, avec ceux du conduit 55 qui arrivent en 55b à un peu moins 350°C, a priori aux environs de 335-345°C.

Outre ces moyens 25,51, on voit figures 3,4 qu'une performance énergétique encore supérieure peut être obtenue en adjoignant un échangeur gaz/gaz, appelé donc aussi récupérateur, 33 qui laisse passer le gaz issu du piquage 47, en échange thermique avec le gaz plus chaud issu de la sortie 21, après que celui-ci ait dépassé le piquage du conduit de recyclage 55 (embranchement 55a).

Précisément et comme illustré figures 3,4, ce récupérateur 33, s'il est retenu, sera favorablement monté de manière qu'y circulent, sans se mélanger, à une première température, dans le conduit 35, en aval du piquage 55a, une partie du gaz issu de la régénération (conduit 23 circuit 3b) et, à une seconde température inférieure à la première, dans le conduit 37, du gaz circulant dans le conduite 470, donc issu du conduit 9 d'alimentation en gaz à dénoxifier (circuit 3a), en aval du piquage 47.

Le conduit 37 du récupérateur 33 sera favorablement situé, sur le circuit 3b et si ce récupérateur existe, en amont des autres moyens 29 de chauffage de gaz comprenant l'un parmi le brûleur 49 à gaz combustible et l'échangeur de chaleur 51.

Figures 3,4, on trouve donc deux entrées 31 successives disposées en série, l'une qui mène au conduit 37 de l'échangeur gaz/gaz 33, l'autre, en aval, qui mène soit au brûleur à gaz combustible 49 (figure 3), soit à l'échangeur de chaleur 51 (figure 4).

Typiquement, des vannes (non représentées) permettront de doser les répartitions de gaz, en 41,47 et/ou entre les circuits 3a et 3b.

Du fait du recyclage, on recommande de préférence que, sur un flux de gaz « X », par exemple de 5 kNm3/h, dans le conduit de récupération 23, on puisse alimenter le piquage 41 avec un débit de gaz compris entre 1/4 et 1/6, de préférence 1/5, du précédent. Un débit équivalent pourra circuler dans le conduit 470. Et un débit quatre fois supérieur circulera favorablement dans le conduit de recyclage 55. Ainsi, le débit total alimentant l'entrée 17 de la partie concernée du réacteur : 5a,5b,5c ou 5d sera alors quatre à six fois, de préférence cinq fois, celui issu du piquage 47, dans le conduit 470.

On pourra ainsi favorablement établir un rapport supérieur à 2/1, et de préférence supérieur à 3/1 entre le débit de gaz issu du conduit 23 recyclé dans le conduit 55 et celui partant vers le conduit 9 d'alimentation en gaz à dénoxifier (conduit 39). On conseille en pratique un rapport 4/1.

La vanne de répartition 57 permettra cela.

Plus généralement, on prévoit de pouvoir monter à un débit de gaz de régénération de 10-12 kNm3/h dans le conduit de régénération 23, quelle que soit la solution retenue (figs. 1-4).

Par ailleurs, on recommande que le rapport, au raccordement 55b, entre le débit de gaz issu du conduit de recyclage 55 et celui provenant du conduit de piquage 470, en sortie des moyens de chauffage 29, soit sensiblement dans les mêmes proportions : supérieur à 2/1, et de préférence supérieur à 3/1. On conseille en pratique un rapport 4/1.

Pour une performance thermique notable, on prévoit par ailleurs:
- que la température de circulation dans le conduit 23 du gaz issu de la régénération soit de l'ordre de 320-360°C, a priori 345°C,
- que la température de la portion de ce gaz (non mélangé) dans le conduit 55, sensiblement à l'endroit (en 55b) de son mélange avec le gaz issu du piquage 41 et réchauffé par les moyens de chauffage 29, soit aussi de l'ordre de 320-350°C, a priori 345°C,
- que la température du gaz (mélangé) en aval du piquage 41, avant l'entrée 31 dans les moyens de chauffage 29 (conduit 470) soit de l'ordre de 160-200°C, a priori 180°C,
- que la température du gaz en aval de ces moyens de chauffage 29, avant le raccordement 55b avec le conduit 55, soit de préférence plus chaude que celle arrivant du conduit 55. Pour le mélange avec le gaz sortant du conduit 55, on prévoit favorablement en sortie 25 une température de l'ordre de 350-390°C.
- qu'en aval de ce mélange, la température du gaz à l'entrée 17 du réacteur, soit de l'ordre de 320-380°C a priori 350°C.

Pour assurer les mélanges de gaz indiqués, des vannes de répartition, telle celle 57 au raccordement 55a, seront disposées à l'endroit des piquages.

Figure 5 et suivantes on voit plus en détail une possible réalisation du réacteur catalytique 1 dans une version à compartiments séparés.

Le réacteur présenté comprend plusieurs modules 61,63,65,67, séparés les uns des autres qui peuvent être utilisés sur le réacteur des figures 1-4.

Chaque module peut, comme illustré :
- contenir du catalyseur de dénoxification, dans les zones respectivement 5a,5b,5c,5d,
- et, pour un fonctionnement du module considéré dans une phase de dénoxification des gaz, présenter la (l'une des) première(s) entrée(s) de gaz 7 s'ouvrant alors sur le conduit d'alimentation en gaz à dénoxifier 9 et la (l'une des) première(s) sortie(s) de gaz 11 s'ouvrant alors sur le conduit 13 d'évacuation à une cheminée du gaz au moins en partie dénoxifiés dans le réacteur, et,
- pour un fonctionnement du module dans une phase de régénération (de la partie considérée) du catalyseur de dénoxification, présenter la (l'une des) première(s) entrée(s) 17 de gaz s'ouvrant alors sur le conduit 19 d'alimentation en gaz de régénération et une dite première sortie de gaz 21 s'ouvrant alors sur le conduit 23 d'évacuation de gaz issu de la régénération.

Le réacteur comprend aussi des moyens de réglage 77,81,83,85 pour faire fonctionner chaque module soit dans la phase de régénération du catalyseur de dénoxification (circuit 3a), soit dans la phase de dénoxification de gaz (circuit 3b).

Plus précisément, on peut favorablement choisir que, comme illustré, le réacteur catalytique 1 comprenne:
- un premier compartiment d'entrée 69 dans lequel du gaz à dénoxifier est à introduire par ladite (les) première(s) entrée(s) de gaz 7 communiquant avec le conduit d'alimentation en gaz à dénoxifier,
- un premier compartiment de sortie 73 duquel du gaz au moins en partie dénoxifié est à évacuer par ladite (les) première(s) sortie(s) de gaz 11 communiquant avec le conduit d'évacuation de gaz 13;
- au moins deux modules (tels 61,63) séparés, chacun contenant du catalyseur de dénoxification (tels 5a,5b) et présentant (au moins) un premier orifice d'entrée 70 communiquant avec le premier compartiment d'entrée 69 (et donc avec l'entrée 7 concernée) et un premier orifice de sortie 110 communiquant avec le premier compartiment de sortie 73, et donc avec la sortie 11 concernée ;
- un deuxième compartiment d'entrée 71 dans lequel du gaz de régénération est à introduire à partir de ladite première entrée 17 de gaz communiquant avec le conduit 19 d'alimentation en gaz de régénération, chaque module présentant un deuxième orifice d'entrée 190 communiquant avec le deuxième compartiment d'entrée 71 du réacteur, et,
- pour chaque module 61,63... des moyens d'obturation d'entrée 77 mobiles aptes à obturer sélectivement le premier ou le deuxième orifice d'entrée, 70 ou 190, du module concerné.

On recommande par ailleurs, pour limiter encore les rejets polluants, que l'installation comprenne en outre, comme illustré :
- un deuxième compartiment de sortie 75 d'où du gaz issu de la régénération du catalyseur est à évacuer, chaque module 61,63... présentant un deuxième orifice de sortie 79 communiquant avec ledit deuxième compartiment de sortie 75 du réacteur, et donc avec la sortie 21 concernée ;
- et, pour chaque module, des moyens d'obturation de sortie 81 mobiles aptes à obturer sélectivement le premier ou le deuxième orifice de sortie 110,79 dudit module, les moyens d'obturation d'entrée et de sortie 77,81 étant agencés pour que chaque module puisse, en fonction des besoins, être traversé soit par les gaz à dénoxifier (conduit 9) soit par le gaz de régénération (conduit 19), indépendamment du ou des autres modules.

Sur les illustrations :
- un volet d'obturation 83 apte à être déplacé par un vérin (tel un des moyens 81) obture ou ouvre le premier orifice de sortie 110,
- et un volet d'obturation 85 apte à être déplacé par un vérin (tel un des moyens 77) obture ou ouvre le deuxième orifice d'entrée 190.

Ces vérins 77,81 peuvent être actionnés par l'injection d'air comprimé 87 de façon sélective, grâce à un système de d'électrovannes (voir figure 5).

En utilisant certaines au moins des caractéristiques qui précèdent, on va pouvoir éviter que la régénération du catalyseur implique l'arrêt du fonctionnement du réacteur catalytique en mode normal de traitement (dénoxification). En phase de régénération, il sera possible de traiter les gaz avant leur rejet à la cheminée. Compte tenu des contraintes imposées sur les rejets, il n'est donc alors pas nécessaire d'arrêter également les installations situées en amont du réacteur, telle une usine d'incinération.

A noter également, qu'à la différence de la solution de FR-A-2855767 (qui peut toutefois bénéficier des solutions des figures 1-4), et où le réacteur est divisé en modules distincts dont certains peuvent être en phase de régénération tandis que, simultanément, les autres sont en mode de fonctionnement normal et permettent la dénoxification des gaz à traiter, la solution des figures 5 et suivantes évite que les gaz issus de la régénération soient évacués avec les gaz traités. Ainsi, on évite que les gaz issus de la régénération et contenant sous forme de gaz les polluants issus des sels ôtés du catalyseur (HCI, SO2, NH3) soient rejetés à l'atmosphère au-delà des teneurs maximales réglementaires.

En outre, on évite ainsi que le réacteur soit de conception relativement lourde, et nécessite notamment de nombreux organes de commande (vérins, etc.).

Le procédé de traitement de gaz ici mis en oeuvre, en utilisant de préférence tout ou partie des moyens qui précèdent comprendra favorablement ce qui suit:
- une étape de traitement de gaz à dénoxifier, comprenant :
   * l'alimentation en gaz à dénoxifier du réacteur catalytique concerné de dénoxification de gaz, par au moins un conduit 9 d'alimentation en gaz à dénoxifier,
   * le traitement du gaz d'alimentation par contact avec un catalyseur (tel 5a,5b..) apte à dénoxifier une partie au moins dudit gaz,
- l'étape de régénération d'une partie au moins du catalyseur, comprenant :
   * l'alimentation d'une partie au moins du catalyseur en gaz de régénération (piquage dans conduit 55),
   * le contact entre ledit catalyseur et le gaz de régénération (via l'accès 17),
   * la récupération de gaz issu de la régénération (conduit 23),
   * la circulation, vers le conduit 9 d'alimentation en gaz à dénoxifier, d'une partie au moins du gaz récupéré, issu de la régénération (conduit 39),
   * le piquage ultérieur de gaz, sur ledit conduit d'alimentation, dans le conduit de piquage 470,
   * le chauffage du gaz circulant dans le conduit de piquage jusqu'à une température adaptée à la régénération du catalyseur (en sortie 25, puis en aval du raccordement 55b),
   * et la circulation du gaz chauffé vers ladite alimentation en gaz de régénération (conduit 19, accès 17), avec une température du gaz à cette entrée 17 du réacteur de l'ordre a priori de 350°C (à environ 5°C près).

Une caractéristique importante sera alors que l'étape de chauffage du gaz circulant dans le conduit de piquage comprenne le recyclage (dans le conduit 55) vers le réacteur catalytique, d'une partie au moins du gaz issu de la régénération et son mélange (en aval de 55b) avec du gaz issu du piquage 47. A priori, ce dernier gaz arrivant, en 25(voir figures 1-4) sera à une température supérieure à celle du gaz de recyclage arrivant en 55b.

De préférence, ledit mélange en aval de l'extrémité 55b interviendra donc entre ledit gaz issu de la régénération et le gaz circulant en aval d'un pré-chauffage, via les moyens de chauffage 29, du gaz issu du piquage 47.

On recommande en outre, pour la performance recherchée, que cette étape de chauffage du gaz via les moyens de chauffage 29 comprenne, entre ledit piquage 47 et l'alimentation en gaz de régénération d'une partie au moins du catalyseur via l'accès 17, et même avant le raccordement en 55b, un chauffage du gaz circulant dans le conduit de piquage 470 par échange thermique, via les conduits 35,37, avec une partie au moins du gaz issu de la régénération, dans l'échangeur récupérateur 33.

Et pour accroître encore la performance thermique, le conseil est que l'échange thermique dans l'échangeur gaz/gaz 33 se déroule en amont dudit mélange en 55b entre le gaz provenant du conduit 55 et celui issu directement du piquage 47.

Quant à la recherche de la souplesse d'utilisation précitée entre dénoxification et régénération, on conseille de la favoriser, pendant l'étape de régénération, en faisant donc circuler le gaz de régénération (conduit 19) vers ladite partie à régénérer du catalyseur, dans au moins un (par exemple 61) des modules 61,63,65... du réacteur 1, chacun contenant donc une partie du catalyseur de dénoxification 5a,5b..., sans que s'y déroule alors l'étape de traitement de gaz à dénoxifier, laquelle se déroulera par contre dans certains au moins des autres modules séparés (ici 63,65,67) par alimentation de ceux-ci en gaz à dénoxifier via le conduit 9 d'alimentation en gaz à dénoxifier.

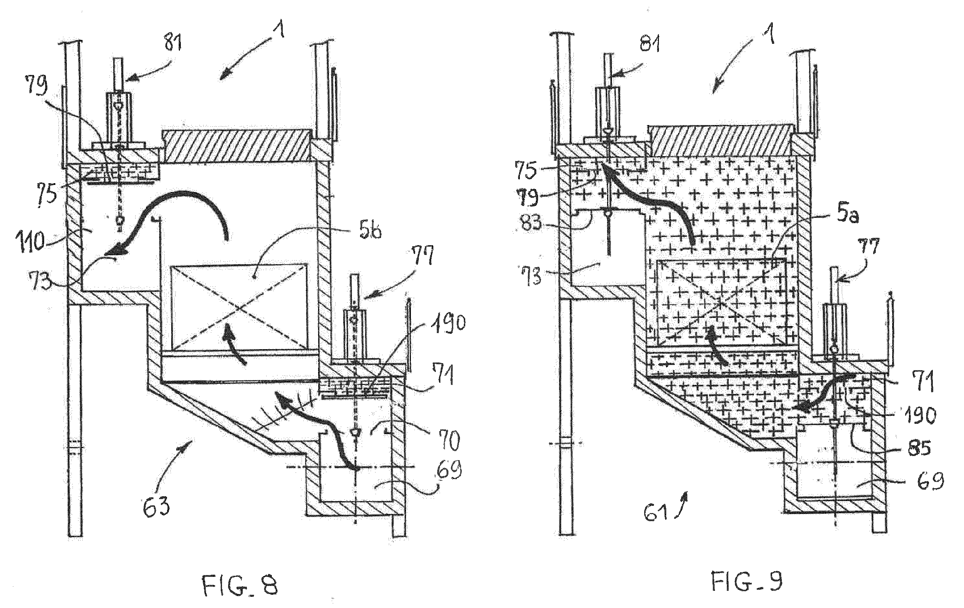

Dans un tel cadre, le procédé de dénoxification des gaz à traiter peut s'opérer comme suit, en référence notamment aux figures 1,8.

Comme indiqué précédemment, les gaz du conduit 9 sont amenés dans le premier compartiment d'entrée 69 du réacteur, via l'un des accès 7 communiquant avec chacun des modules concernés, par exemple 63,65,67 sur la figure 1. Les vérins 77 du ou des modules aptes à assurer la dénoxification sont dans la position telle que le deuxième orifice d'entrée 190 est obturé, tandis que les vérins 81 sont dans la position telle que le deuxième orifice de sortie 79 est obturé. Par exemple dans le module 63 (figure 8), les gaz qui y pénètrent traversent le bloc catalyseur 5b puis pénètrent dans le premier compartiment de sortie 73 avant d'être évacués par le conduit 13, via la sortie 11 concernée. En fonctionnement normal, tous les modules fonctionnent ainsi en parallèle.

La dénoxification peut alors s'opérer en parallèle dans tous les modules. La température des gaz à traiter, en entrée du réacteur, peut être comprise entre 165 et 240°C, de préférence entre 185 et 200°C environ. A cette température, il se forme des sels qui contaminent la surface du catalyseur et en diminue progressivement l'efficacité.

L'activité du catalyseur est régulièrement suivie. L'augmentation de la teneur en NH3 dans les gaz rejetés à la cheminée 15, au-delà d'un certain seuil, indique que le catalyseur n'est plus suffisamment performant.

Un ou plusieurs modules sont alors isolés et ne fonctionnent plus en phase de traitement, mais en phase de régénération (figure 9).

La phase de régénération comprend en particulier une étape de déchloration/désulfuration.

Pour le module concerné, tel celui 61 figure 1, le vérin 77 est dans la position telle que le premier orifice d'entrée 70 est obturé, tandis que le vérin 37 est dans la position telle que le premier orifice de sortie 32 est obturé.

Ledit module 61 est alimenté par les gaz de régénération (conduit 19) du fait de la température d'entrée de ces gaz dans le réacteur, il se produit une sublimation des sels déposés sur le catalyseur, qui sont évacués sous forme de gaz (notamment SO2, HCl, NH3). La régénération du catalyseur concerné (ici 5a) s'opère. En effet, les gaz de régénération pénètrent dans le module en cause par le deuxième compartiment d'entrée 71, traversent le bloc catalyseur 5a puis pénètrent dans le deuxième compartiment de sortie 75 avant d'être évacués par le conduit 23, via la sortie 21.

Simultanément, les gaz à traiter peuvent pénétrer via les premiers compartiments d'entrée 69 et de sortie 73 dans les modules en phase de dénoxification. Ainsi, par une simple commande des vérins 77,81, la régénération d'un module n'entraîne pas l'arrêt de l'installation et les gaz admis en 49 peuvent toujours être traités en continu. On augmente ainsi la durée de vie du catalyseur sans perte de capacité de fonctionnement de l'installation.

Les produits sublimés sont évacués avec les gaz issus de la régénération du conduit 23, séparément des gaz traités arrivant dans le conduit 13. De ce fait, les produits sublimés ne sont pas rejetés à l'atmosphère mais sont recyclés. En fin de phase de régénération, de l'air ambiant peut être injecté dans le deuxième compartiment d'entrée 71, afin de le purger et d'éviter ainsi les problèmes de corrosion. Le passage des gaz recyclés dans le récupérateur 33 améliore le rendement thermique.

A noter encore qu'un ventilateur 193 peut entraîner ou favoriser la circulation de gaz dans le conduit 23, vers la vanne de répartition 57 (cas des figures 1-4) ; idem avec le ventilateur 195 sur le conduit 470, entre les zones 47 et 31 et plus précisément en amont de l'entrée dans le récupérateur 33 dans le cas des figures 3,4.

## Revendications

1. Installation de traitement de gaz, comprenant :
- un circuit de traitement de gaz à dénoxifier où est disposé un réacteur catalytique (1) de dénoxification de gaz qui :
- présente une première entrée de gaz à dénoxifier (7) communiquant avec un conduit d'alimentation en gaz à dénoxifier et une première sortie de gaz dénoxifié (11) communiquant avec un conduit d'évacuation de gaz au moins en partie dénoxifié,
- et contient un catalyseur apte à dénoxifier une partie au moins du gaz à dénoxifierentré dans le réacteur catalytique et au contact duquel passe une partie au moins dudit gaz entré,
- un circuit de régénération d'une partie au moins du catalyseur du réacteur catalytique, ce circuit présentant une première entrée (17) de gaz de régénération dans le réacteur catalytique communiquant en amont avec un conduit d'alimentation en gaz de régénération adapté à régénérer le catalyseur et une première sortie de gaz (21) communiquant avec un conduit (23,39) d'évacuation de gaz issu de la régénération, le conduit d'alimentation en gaz de régénération communiquant en amont avec une sortie (25,27) de gaz de moyens (29) de chauffage de gaz dont une entrée (31) de gaz communique avec le conduit d'alimentation en gaz à dénoxifier,
**caractérisée en ce qu'**il comprend un conduit de recyclage (55) pour recycler une partie du gaz issu de la régénération, le conduit de recyclage étant connecté, à une extrémité amont (55a), au conduit (23,39) d'évacuation de gaz issu de la régénération et, à une extrémité aval (55b), entre les moyens (29) de chauffage des gaz et ladite première entrée (17) de gaz de régénération dans le réacteur catalytique, pour assurer ainsi un mélange de gaz.

2. Installation selon la revendication 1, où le conduit (39) d'évacuation de gaz issus de la régénération communique avec le conduit (9) d'alimentation en gaz à dénoxifier, en amont des moyens (29) de chauffage des gaz, pour mélanger ces gaz.

3. Installation selon la revendication 2, où la communication entre le conduit (39) d'évacuation de gaz issus de la régénération et celui (9) d'alimentation en gaz à dénoxifier, en amont des moyens (29) de chauffage des gaz, est située en amont d'au moins un appareil de traitement (43,45) apte à diminuer la teneur des gaz à traiter en au moins l'un des composés suivants: S02, HCI.

4. Installation selon l'une des revendications 1 à 3, où les moyens (29) de chauffage des gaz comprennent un brûleur (49) à gaz.

5. Installation selon l'une des revendications 1 à 3, où les moyens (29) de chauffage des gaz comprennent un échangeur de chaleur (33) où circulent, sans se mélanger :
- les gaz reçus à ladite entrée (31) de gaz qui communique avec le conduit (9) d'alimentation en gaz à dénoxifier, et,
- des produits (53) qui arrivent plus chauds dans l'échangeur de chaleur.

6. Installation selon la revendication 5, où les produits qui arrivent dans l'échangeur de chaleur sont des fumées recyclées issues d'une chaudière ou de la vapeur d'un cycle de valorisation énergétique.

7. Installation selon la revendication 2 ou cette revendication 2 et l'une des revendications 3 à 6, où une vanne de répartition (57) est disposée pour répartir les gaz issus de la régénération entre ceux entrant dans le conduit de recyclage (55) et ceux dirigés vers le conduit (9) d'alimentation en gaz à dénoxifier, dans un rapport supérieur à 2/1, et de préférence supérieur à 3/1.

8. Installation selon la revendication 2 ou cette revendication 2 et l'une des revendications 3 à 7, où la connexion de l'extrémité aval du conduit de recyclage entre les moyens (29) de chauffage des gaz et ladite première entrée (17) de gaz de régénération dans le réacteur catalytique apporte, dans le conduit (19) d'alimentation en gaz de régénération du réacteur catalytique, un débit volumique de gaz issus de la régénération supérieur à au moins deux fois, et de préférence à au moins trois fois, celui issu des moyens (29) de chauffage des gaz.

9. Installation selon l'une des revendications 1 à 8, où le réacteur catalytique (9) comprend :
- plusieurs modules (61,63,65,67) séparés les uns des autres qui, chacun:
* contiennent du catalyseur de dénoxification (5a,5b,5c,5d),
* pour un fonctionnement du module dans une phase de dénoxification des gaz, présentent une dite première entrée de gaz communiquant alors avec le conduit (9) d'alimentation en gaz à dénoxifier et une dite première sortie de gaz communiquant alors avec le conduit (13) d'évacuation de gaz au moins en partie dénoxifiés,
* pour un fonctionnement du module dans une phase de régénération du catalyseur de dénoxification, présentent une dite première entrée de gaz communiquant alors avec le conduit (19) d'alimentation en gaz de régénération et une dite première sortie de gaz communiquant alors avec le conduit d'évacuation (23) de gaz issus de la régénération, et
- des moyens de réglage (77,81,83,85...) pour faire fonctionner chaque module soit dans la phase de régénération du catalyseur de dénoxification, soit dans la phase de dénoxification des gaz.

10. Installation selon l'une des revendications 1 à 8, où le réacteur catalytique comprend :
- un premier compartiment d'entrée dans lequel du gaz à traiter est à introduire par ladite première entrée de gaz communiquant avec le conduit (9) d'alimentation en gaz à dénoxifier;
- un premier compartiment de sortie duquel du gaz au moins en partie dénoxifiés est à évacuer par ladite première sortie de gaz communiquant avec le conduit (13) d'évacuation de gaz;
- au moins deux modules séparés (61,63,65,67), chacun contenant du catalyseur de dénoxification et présentant un premier orifice d'entrée communiquant avec le premier compartiment d'entrée et un premier orifice de sortie communiquant avec le premier compartiment de sortie ;
- un deuxième compartiment d'entrée dans lequel du gaz de régénération est à introduire par ladite première entrée de gaz communiquant avec le conduit d'alimentation en gaz de régénération, chaque module présentant un deuxième orifice d'entrée communiquant avec ledit deuxième compartiment d'entrée du réacteur ;
- pour chaque module (61,63,65,67), des moyens d'obturation d'entrée (77) mobiles aptes à obturer sélectivement le premier ou le deuxième orifice d'entrée dudit module.

11. Installation selon la revendication 10 qui comprend en outre:
- un deuxième compartiment de sortie d'où du gaz issu de la régénération du catalyseur est à évacuer, chaque module présentant un deuxième orifice de sortie communiquant avec ledit deuxième compartiment de sortie du réacteur ;
- pour chaque module, des moyens d'obturation de sortie (81) mobiles aptes à obturer sélectivement le premier ou le deuxième orifice de sortie dudit module, lesdits moyens d'obturation d'entrée et de sortie (77, 81) étant agencés pour que chaque module puisse, en fonction des besoins, être traversé soit par les gaz à traiter soit par les gaz de régénération, indépendamment du ou des autres modules.

12. Procédé de traitement de gaz, comprenant :
- une étape de traitement de gaz à dénoxifier, comprenant :
* une alimentation en gaz à dénoxifier d'un réacteur catalytique de dénoxification de gaz, par au moins un conduit d'alimentation en gaz à dénoxifier,
* un traitement du gaz d'alimentation par contact avec un catalyseur apte à dénoxifier une partie au moins dudit gaz,
- une étape de régénération d'une partie au moins du catalyseur, comprenant :
* une alimentation d'une partie au moins du catalyseur en gaz de régénération,
* un contact entre ledit catalyseur et le gaz de régénération,
* une récupération de gaz issu de la régénération,
* une circulation, vers le conduit d'alimentation en gaz à dénoxifier, d'une partie au moins du gaz issu de la régénération et récupéré,
* un piquage ultérieur de gaz, sur ledit conduit d'alimentation, dans un conduit de piquage,
* un chauffage du gaz circulant dans le conduit de piquage jusqu'à une température adaptée à la régénération du catalyseur,
* et une circulation du gaz chauffé vers ladite alimentation en gaz de régénération,
**caractérisé en ce que** ledit chauffage du gaz circulant dans le conduit de piquage comprend un recyclage, vers le réacteur catalytique (1), d'une partie au moins du gaz issu de la régénération et son mélange avec du gaz issu du piquage.

13. Procédé de traitement de gaz selon la revendication 12, où ledit mélange intervient entre ledit gaz issu de la régénération et du gaz circulant en aval d'un pré-chauffage du gaz issu du piquage.

14. Procédé de traitement de gaz selon la revendication 12 ou 13, où l'étape de chauffage du gaz circulant dans le conduit de piquage pendant l'étape de régénération comprend, entre ledit piquage et l'alimentation en gaz de régénération d'une partie au moins du catalyseur, un chauffage du gaz circulant dans le conduit de piquage par échange thermique avec une partie au moins du gaz issu de la régénération, dans un échangeur gaz/gaz.

15. Procédé de traitement de gaz selon la revendication 14, où l'échange thermique dans l'échangeur gaz/gaz se déroule en amont dudit mélange d'une partie au moins du gaz issu de la régénération et du gaz issu du piquage.

16. Procédé de traitement de gaz selon l'une des revendications 12 à 15, où, pendant l'étape de régénération, on fait circuler le gaz de régénération vers ladite partie du catalyseur, dans au moins un premier module du réacteur catalytique parmi plusieurs modules séparés les uns des autres qui chacun contiennent une partie du catalyseur de dénoxification, sans que s'y déroule alors l'étape de traitement de gaz à dénoxifier, laquelle se déroule par contre dans certains au moins des autres modules séparés, par alimentation de ceux-ci en gaz à dénoxifier via le conduit d'alimentation en gaz à dénoxifier.
